(19) Europäisches Patentamt
European Patent Office
Office européen des brevets

(11) Numéro de publication: **0 393 287 A1**

(12) # DEMANDE DE BREVET EUROPEEN

(21) Numéro de dépôt: **89401119.6**

(51) Int. Cl.5: **C01F 17/00, C22B 3/00, C22B 59/00**

(22) Date de dépôt: **21.04.89**

(43) Date de publication de la demande: **24.10.90 Bulletin 90/43**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Levèque, Alain**
**18, rue du Général Guillaumat**
**F-17000 La Rochelle(FR)**
Inventeur: **Fitoussi, Richard**
**12, rue Brière de Boismont**
**F-94160 Saint-Mandé(FR)**
Inventeur: **Sabot, Jean-Louis**
**3, Avenue Pascal**
**F-78600 Maisons Laffitte(FR)**

(74) Mandataire: **Esson, Jean-Pierre et al**
**Rhône-Poulenc Interservices Service**
**Brevets Chimie 25, quai Paul Doumer**
**F-92408 Courbevoie Cedex(FR)**

(54) **Procédé de traitement de résidus contenant des terres rares et du cobalt.**

(57) La présente invention a pour objet un procédé de traitement de résidus contenant au moins une terre rare et du cobalt.

Le procédé de traitement des résidus selon l'invention est caractérisé par le fait qu'il consiste
- à opérer la mise en solution dudit résidu à l'aide d'acide nitrique,
- à procéder à la solution de la ou des terres rares, par extraction liquide-liquide en mettant en contact une phase aqueuse nitrique contenant les éléments à séparer et une phase organique contenant un agent d'extraction des terres rares constitué par au moins un composé organophosphoré neutre,
- puis, à récupérer la ou les terres rares de la phase organique.

Le procédé de l'invention est particulièrement bien adapté au traitement des résidus de fabrication des aimants samarium/cobalt en vue de récupérer le samarium et le cobalt.

EP 0 393 287 A1

# PROCEDE DE TRAITEMENT DE RESIDUS CONTENANT DES TERRES RARES ET DU COBALT

La présente invention a pour objet un procédé de traitement de résidus contenant des terres rares et du cobalt. Elle a trait, plus particulièrement a la récupération du samarium et du cobalt, a partir de déchets résultant de la fabrication des aimants.

A l'heure actuelle, on assiste à un développement important des alliages à base de terres rares, en particulier des alliages samarium/cobalt en tant qu'aimants permanents.

Les terres rares, notamment le samarium étant des matières premières onéreuses, il convient de les récupérer dans tous les résidus de fabrication des aimants.

On connait divers procédés de traitement de ces résidus. Certains opèrent selon une voie de précipitation sélective, après attaque acide du résidu (JP-A 61/000533, JP-A 61/000532, JP-A 54/089904), d'autres font appel à une électrolyse de la solution obtenue après attaque pour récupérer le cobalt (JP-A 59/067384).

On a également proposé selon JP-A 60/122718, un procédé de récupération du samarium à partir d'un résidu le contenant qui consiste à dissoudre ledit résidu à l'aide d'une solution acide, puis à extraire le samarium dans une phase organique contenant un agent d'extraction tel qu'un acide dialkylphosphorique, en particulier l'acide di (éthyl - 2 hexyl) phosphorique, puis à extraire le samarium de la phase organique en phase aqueuse, à l'aide d'une solution aqueuse acide concentrée puisque sa normalité varie entre 1 et 5N, de préférence entre 2 et 5N. Le procédé présente l'inconvénient d'une réextraction difficile du samarium, au moment de la régénération du solvant d'extraction ce qui induit un coût opératoire important.

La présente invention propose un procédé de récupération des terres rares contenues dans un résidu selon un procédé d'extraction des terres rares à partir d'une solution obtenue après attaque acide, procédé qui permet de traiter des solutions plus chargées en éléments métalliques et qui ne nécessite pas ou quasiment pas d'acide, au moment de la réextraction, ce qui conduit globalement à un procédé beaucoup plus économique.

La présente invention a précisement pour objet un procédé de traitement d'un résidu contenant au moins une terre rare et du cobalt caractérisé par le fait qu'il consiste :

-à opérer la mise en solution dudit résidu à l'aide d'acide nitrique,

-à procéder à la séparation de la ou des terres rares, par extraction liquide-liquide en mettant en contact une phase aqueuse nitrique contenant les éléments à séparer et une phase organique contenant un agent d'extraction des terres rares constitué par au moins un composé organo-phosphoré neutre,

-puis, à récupérer la ou les terres rares de la phase organique.

Les résidus traités selon le procédé de l'invention sont des déchets sous une forme quelconque (poudres, copeaux, fragments de lingots, poussières, etc...) qui résultent le plus souvent, de la fabrication d'aimants du type $Sm\ Co_5$, $Sm_2\ Co_{17}$, $TrCo_5$ ou $Tr_2Co_{17}$.

L'expression "terres rares" (TR) utilisée conformément à l'invention comprend les éléments de terres rares appelés lanthanides ayant des numéros atomiques de 57 à 71 inclus et l'yttrium de numéro atomique égal à 39.

Les résidus traités peuvent contenir également une plus ou moins grande quantité d'autres éléments métalliques et parfois métalloïdiques. On rencontre, généralement, des impuretés constituées par des métaux de transition, le plus souvent, le fer, le cuivre, le nickel et également des métaux tels que le manganèse, le titane. Il est possible qu'il y ait aussi présence de métaux alcalins ou alcalino-terreux, par exemple, du sodium, du calcium, etc ...

La proportion de terre(s) rare(s) et de cobalt dans lesdits résidus peut varier dans de larges limites.

Les résidus peuvent présenter un pourcentage en poids de terre(s) rare(s) pouvant varier de 10 à 50 % , de cobalt allant de 30 à 80 % , le complément à 100 % étant constitué par des impuretés qui, le plus souvent n'excèdent pas plus de 25 % du poids du résidu.

Il est à noter que les valeurs mentionnées ci-dessus, n'ont aucun caractère critique et ne sont données qu'à titre indicatif.

De plus, il y a lieu de remarquer que l'on ne sortira pas du cadre de la présente invention à utiliser le procédé de l'invention pour récupérer la ou les terres rares et le cobalt de tout résidu industriel quelle que soit sa forme solide, pâteuse, etc... C'est ainsi que l'on peut citer le traitement des boues et des poudres d'usinages, etc...

Le procédé de l'invention est particulièrement bien adapté au traitement des résidus de fabrication des aimants samarium/cobalt, en vue de récupérer le samarium et le cobalt.

Conformément au procédé de l'invention, on réalise dans la première étape du procédé, la solubilisation du résidu à traiter, à l'aide d'acide nitrique.

Avant l'attaque acide, une opération de concassage ou de broyage peut s'avérer intéressante, car il est souhaitable que le résidu à traiter soit à l'état divisé. En effet, la dimension des particules attaquées n'est pas un facteur critique selon le procédé de l'invention ; toutefois, si l'on désire une attaque assez rapide, il est avantageux de mettre en oeuvre des particules ayant une granulomètrie assez fine et, de préférence, dont le diamètre est inférieur à environ 10 mm ; plus particulièrement des particules ayant un diamètre inférieur à 2 mm conduisent à une mise en oeuvre aisée.

Après cette opération facultative, on attaque le résidu à l'acide nitrique. On peut faire appel à l'acide nitrique concentré ou dilué.

La quantité d'acide nitrique mise en oeuvre est de préférence au moins égale à la quantité stoechiométrique des éléments à solubiliser.

De bonnes conditions sont réalisées lorsque l'acide nitrique est utilisé avec un excès de 25 à 30 % par rapport à la quantité stoechiométrique.

Les conditions d'attaque dépendent également de la nature du résidu à traiter, de la concentration de l'acide et de la température choisie.

De bonnes conditions d'attaque sont généralement obtenues lorsque l'attaque est effectuée avec un acide nitrique ayant une normalité choisie entre 6 et 15 N, et à une température comprise entre 15 °C et 100 °C.

La solution aqueuse de nitrates des différents éléments métalliques issue de l'étape d'attaque, peut être mise en oeuvre telle quelle ou bien après lui avoir fait subir une concentration par évaporation ou une dilution à l'eau.

Généralement, on met en oeuvre le procédé d'extraction liquide-liquide sur une solution issue de l'étape d'attaque nitrique présentant une concentration totale en ion nitrate variant de 100 à 600 g/l : ces bornes ne présentant aucun caractère critique. D'une manière préférentielle, elle a une concentration comprise entre 300 et 600 g/l.

Avant de procéder à l'étape de séparation, il peut être nècessaire de séparer un résidu d'insolubles composé d'impuretés non attaquées selon les techniques classiques de séparation solide/liquide, de préférence par filtration.

L'étape suivante du procédé consiste à séparer la ou les terres rares des autres éléments métalliques, par extraction liquide-liquide en mettant en contact la solution aqueuse issue de l'attaque avec une phase organique contenant, à titre d'agent d'extraction, un composé organophosphoré neutre.

L'extraction est réalisée au moyen d'un composé organophosphoré neutre substantiellement insoluble dans l'eau et choisi parmi les quatre classes suivantes :

les phosphates 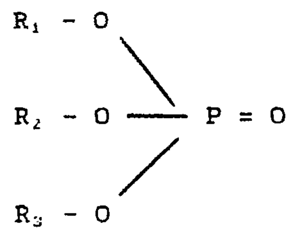 (I)

les phosphonates 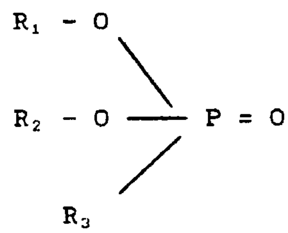 (II)

les phosphinates 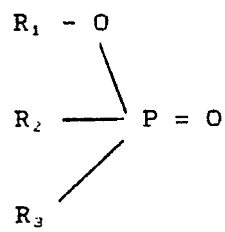 (III)

les oxydes de phosphine 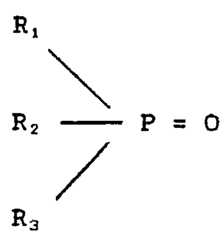 (IV)

dans les formules (I) à (IV), $R_1$, $R_2$ et $R_3$ représentent des radicaux hydrocarbonés tels que des radicaux aliphatiques, cycloaliphatiques et/ou aromatiques.

Lesdits radicaux peuvent contenir de 1 à 18 atomes de carbone mais de préférence, au moins l'un des radicaux doit avoir 4 atomes de carbone.

Les agents d'extraction de formule (I) à (IV) peuvent être utilisés seuls ou en mélange.

Parmi ces composés, on met notamment en oeuvre selon l'invention, ceux qui sont disponibles industriellement comme le tri-n-butylphosphate (TBP), le tri- isobutylphosphate (TIBP), le dibutylbutylphosphonate (DBBP), le di- (éthyl- 2 hexyl) éthyl- 2 hexylphosphonate (DEHEHP), l'oxyde de tri- n- octylphosphine (TOPO).

Dans le procédé de l'invention, on fait appel de préférence au tributylphosphate.

La phase organique selon le procédé de l'invention contient éventuellement outre l'agent d'extraction, un diluant organique. Comme diluants susceptibles d'être utilisés, on peut mettre en oeuvre ceux habituellement mis en oeuvre pour réaliser des opérations d'extraction liquide-liquide. Parmi ceux-ci, on peut citer les hydrocarbures aliphatiques comme par exemple, le dodécane et les coupes pétrolières du type kérosène, les hydrocarbures aromatiques comme par exemple, les coupes pétrolières constituées de mélange d'alkylbenzènes notamment les coupes du type Solvesso commercialisées par la Société EXXON.

On peut également utiliser un mélange de ces diluants.

On fait appel, de préférence, aux coupes pétrolières du type kérosène.

La proportion de l'agent d'extraction dans la phase organique varie avec l'agent d'extraction dans de larges limites.

Sa concentration peut varier de 5 % en volume lorsque l'agent d'extraction est en solution dans un diluant jusqu 'à environ 100 % lorsque l'agent est utilisé pur.

Une proportion comprise entre 50 et 80 % en volume est avantageuse lorsque l'on fait appel au tributylphosphate, agent d'extraction préféré de l'invention.

La phase organique selon le procédé de l'invention peut également contenir divers agents modifieurs dont un des buts essentiels est d'améliorer les propriétés hydrodynamiques du système sans altérer les propriétés complexantes de l'agent d'extraction. Parmi les composés convenant bien, on peut citer notamment, les composés à fonction alcool et, en particulier, les alcools lourds dont le nombre d'atomes de carbone est compris entre 4 et 15. Une proportion pouvant atteindre 20 % en volume rapportée à la phase organique est généralement favorable.

On opère la séparation de la ou des terres rares des autres éléments métalliques en opérant à contre-courant sur plusieurs étages théoriques d'extraction, chaque étage étant constitué par l'opération mélange-décantation.

On met en contact la phase aqueuse et la phase organique à une température qui ne présente aucun caractère critique ; elle est choisie généralement entre 15 °C et 65 °C et est le plus souvent comprise entre 20 °C et 50 °C.

L'étape de séparation conduit à l'obtention d'une part, d'une solution aqueuse qui contient le ou les éléments non extraits de la solution d'attaque à savoir, le cobalt et les autres impuretés métalliques et une phase organique contenant la ou les terres rares.

Pour améliorer la pureté de la ou des terres rares, il est souhaitable d'effectuer, avant l'étape de réextraction, une étape de lavage.

Dans cette étape de lavage, la phase organique est lavée avec de l'eau ou une solution diluée d'acide nitrique, inférieure à environ 0,3 N.

On effectue ensuite une étape de réextraction de la ou des terres rares contenues dans le solvant d'extraction.

On sépare la ou les terres rares extraites dans la phase organique par mise en contact de cette dernière avec de l'eau ou éventuellement une solution diluée d'acide nitrique, inférieure à environ 0,3 N.

Après séparation de la phase aqueuse et de la phase organique, la ou les terres rares sont recueillies dans la phase aqueuse sous forme de nitrate(s) de terre(s) rare(s) tandis que le solvant d'extraction peut être recyclé à l'étape d'extraction.

Conformément au procédé de l'invention, on peut récupérer à partir de ladite solution la ou les terres rares sous forme de leurs oxydes.

A cet effet, on effectue la précipitation de la ou des terres rares contenues dans la phase aqueuse, sous forme d'hydroxyde, de carbonate ou d'oxalate, puis on soumet le précipité séparé, à un traitement thermique.

On fait appel selon le cas, à une solution aqueuse d'hydroxyde de métal alcalin ou d'ammonium ; de carbonate de métal alcalin ou d'ammonium; d'oxalate de métal alcalin ou d'ammonium ou bien d'acide oxalique.

Les agents précipitants préférés sont l'ammoniaque, le carbonate et l'oxalate d'ammonium ou l'acide oxalique.

La quantité d'agent précipitant est au moins égale à la quantité stoechiométrique de nitrate(s) de terre(s) rare(s) mais de préférence en léger excès pouvant atteindre 20 % de la quantité stoechiomètrique.

La précipitation est conduite d'une manière classique, selon les conditions décrites dans la littérature.

On récupère un précipité d'hydroxyde(s) de terre(s) rare(s), ou de carbonate(s) de terre(s) rare(s) ou d'oxalate(s) de terre(s) rare(s).

Ledit précipité est séparé selon les techniques classiques de séparation solide-liquide telles que filtration, centrifugation, essorage ou décantation.

On peut éventuellement soumettre le précipité à une opération de lavage à l'eau et ensuite, on procède à la calcination du précipité séparé.

Conformément au procédé de l'invention, on récupère la ou les terres rares sous forme de leurs oxydes avec un très bon rendement pouvant être supérieur à 95 % et à une pureté supérieure à 99 %.

Une variante du procédé de l'invention consiste à récupérer le cobalt à partir de la solution aqueuse épuisée en terre(s) rare(s) obtenue à l'étape d'extraction et qui contient le ou les éléments non extraits de la solution d'attaque à savoir le cobalt et les autres impuretés métalliques.

Pour obtenir le cobalt sous forme d'oxyde, on effectue sa précipitation sous forme d'oxalate, puis on soumet le précipité à un traitement thermique.

La précipitation de l'oxalate de cobalt est conduite en traitant la solution de nitrates de cobalt et des autres impuretés métalliques avec une solution aqueuse d'acide oxalique ou d'oxalate de métal alcalin ou

d'ammonium.

On précipite sélectivement le cobalt, sous forme d'oxalate, par rapport aux impuretés constituées par un ou des métaux de transition.

Toutefois, s'il y a présence d'un ou plusieurs ions alcalino-terreux (en particulier $Ca^{++}$) parmi les impuretés, il apparait nécessaire de les éliminer au préalable en effectuant leur précipitation, par exemple, sous forme de fluorure.

On peut faire appel, à titre d'agents précipitants, à une solution aqueuse de fluorure de métal alcalin, de préférence de sodium ou de fluorure d'ammonium.

La précipitation est effectuée d'une manière connue en soi.

On récupère un précipité de fluorure (s) d'un ou des métaux alcalino-terreux que l'on sépare ensuite selon les techniques connues de séparation solide-liquide.

Selon le procédé de l'invention, on effectue si nécessaire, l'élimination des ions alcalino-terreux en particulier du calcium et, ensuite on précipite le cobalt sous forme d'oxalate.

Comme décrit ci-dessus pour la préparation d'un ou des oxydes de terres rares, l'oxalate de cobalt est séparé, éventuellement lavé, puis calciné.

Selon le procédé de l'invention, on récupère le cobalt avec un très bon rendement pouvant être supérieur à 95 % et à une pureté supérieure à 98 %.

On donne, ci-après, des exemples de réalisation de l'invention qui illustrent le procédé de l'invention sans toutefois en limiter la portée.

Exemple

a) Le résidu traité dans cet exemple se présente sous la forme d'une poudre noire humide dont l'analyse pondérale est la suivante :

. eau = 16,5 %
. cobalt = 48,3 %
. terres rares = 27,2 % dont
samarium : 20,9 %
lanthane : 0,8 %
néodyme : 3,9 %
praséodyme : 0,6 %
autres terres rares : 1,0 %
. impuretés = 8 % dont :
Calcium : 1,5 % Nickel : 0,09 % Aluminium : 0,075 %
Sodium : 0,065 % Fer : 0,13 % Zinc : 0,016 %
Silicium : 0,12 % Cuivre : 0,03 %

b) Dans une première étape, on réalise l'attaque de ce résidu par l'acide nitrique.

Pour 1 kg de la poudre précédente, on met en oeuvre 2,8 kg d'acide nitrique concentré à 65 % (~ 14 N) ; on ajoute la poudre, dans l'acide nitrique et on laisse la réaction se produire en maintenant une température de 70° C, pendant 1 heure.

On ajuste le volume de la solution à 2,8 litres et l'on filtre.

On récupère ainsi un résidu insoluble d'inattaqués, composé essentiellement de silicate et qui, une fois séché, pèse 32 g.

On recueille donc, après filtration, une solution aqueuse claire ayant la composition suivante :

Cobalt : 170 g/l
Terres Rares : 96 g/l (dont Samarium : 74 g/l)
Nitrate d'ammonium : 78 g/l
Acidité résiduelle : 0,3 N

c) On soumet ensuite cette solution à l'opération d'extraction liquide-liquide conduite en suivant le mode de mise en oeuvre illustré par la figure 1.

L'appareillage utilisé comprend une batterie à plusieurs étages du type mélangeurs décanteurs fonctionnant à contre-courant et constituée d'une section d'extraction (a) et de lavage (a') comportant 10 étages théoriques et une section de contre-extraction (b) des terres rares extraites dans la phase organique comportant 5 étages théoriques.

L'agent d'extraction utilisé est le tri-n-butylphosphate. Il est dilué à raison de 60 % en volume dans le kérosène. Ce mélange constitue le solvant d'extraction.

On introduit la solution aqueuse issue de l'étape d'attaque du résidu, en 1, au 5e étage de la batterie à

un débit de 1 litre/heure.

On introduit en 2, le solvant d'extraction au débit de 1 litre/heure.

On introduit en 3, dans la section lavage, de l'eau acidifiée ($HNO_3$ 0,1 N) à un débit de 0,1 litre/heure.

On recueille en 4, à l'entrée de la section d'extraction, une solution de nitrate de cobalt contenant 152 g/l de cobalt et 70 g/l de nitrate d'ammonium.

On introduit en 5, en sortie de la section de contre-extraction, et à contre-courant de la phase organique, de l'eau à un débit de 0,8 litre/heure.

On recueille en 6, la solution purifiée de nitrates de terres rares.

d) On traite cette solution pour en récupérer les terres rares, par addition d'acide oxalique.

Par litre de solution purifiée, on ajoute 200 g d'acide oxalique $(COOH)_2$, $2H_2O$.

On précipite ainsi un oxalate de terres rares que l'on sépare par filtration puis calcine pendant 3 heures à 850 °C.

On récupère ainsi, pour 1 kg de résidu initial, 308 g d'un oxyde de terres rares dont l'analyse est la suivante :

$Sm_2O_3$ : 76,8 %
$La_2O_3$ : 2,9 %
$Nd_2O_3$ : 14,3 %
$Pr_6O_{11}$ : 2,2 %
autres $TR_2O_3$ : 3,8 %
Cobalt < 100 ppm
Fer < 50 ppm
Nickel < 50 ppm
Aluminium < 50 ppm
Zinc < 50 ppm
Calcium < 50 ppm
Silicium < 50 ppm

Le rendement de récupération des terres rares est supérieur à 97,5 %.

e) La solution de nitrate de cobalt est traitée pour en récupérer le cobalt.

On ajoute à cette solution du fluorure de sodium (20 g de NaF par litre de solution) et l'on précipite ainsi le fluorure de calcium que l'on sépare par filtration.

Sur la solution épurée, on réalise la précipitation du cobalt, par addition de 400 g d'acide oxalique par litre de solution.

Après filtration de l'oxalate de cobalt et calcination, on récupère, pour 1 kg de résidu initial, 630 g d'oxyde de cobalt dont l'analyse est la suivante :

$TR_2O_3$ < 100 ppm
Calcium < 100 ppm
Sodium, nickel < 100 ppm
Cuivre < 100 ppm
Fer, silicium < 50 ppm

Le rendement de récupération du cobalt est de 95,7 %.

## Revendications

1. Procédé de traitement d'un résidu contenant au moins une terre rare et du cobalt caractérisé par le fait qu'il consiste :
- à opérer la mise en solution dudit résidu à l'aide d'acide nitrique,
- à procéder à la séparation de la ou des terres rares, par extraction liquide-liquide en mettant en contact une phase aqueuse nitrique contenant les éléments à séparer et une phase organique contenant un agent d'extraction des terres rares constitué par au moins un composé organophosphoré neutre,
- puis, à récupérer la ou les terres rares de la phase organique.

2. Procédé selon la revendication 1 caractérisé par le fait que l'on soumet ledit résidu à une opération de concassage ou de broyage de telle sorte que le diamètre des particules soit inférieur à 2 mm.

3. Procédé selon l'une des revendications 1 et 2 caractérisé par le fait que l'attaque du résidu est effectuée avec de l'acide nitrique mis en oeuvre en une quantité égale à la quantité stoechiométrique des éléments à solubiliser ou en excès pouvant atteindre jusqu'à 30 % de la quantité stoechiométrique.

4. Procédé selon l'une des revendications 1 à 3 caractérisé par le fait que l'attaque du résidu est effectuée à l'aide d'une solution aqueuse d'acide nitrique ayant une normalité choisie entre 6 N et 15 N.

5. Procédé selon l'une des revendications 1 à 4 caractérisé par le fait que la température de l'attaque est comprise entre 15 °C et 100 °C.

6. Procédé selon l'une des revendications 1 à 5 caractérisé par le fait que la solution issue de l'étape d'attaque nitrique présente une concentration exprimée en ion nitrate comprise entre 100 g/l et 600 g/l.

7. Procédé selon la revendication 6 caractérisé par le fait que ladite concentration est comprise entre 300 g/l et 600 g/l.

8. Procédé selon l'une des revendications 1 à 7 caractérisé par le fait que l'agent d'extraction est choisi parmi l'une des classes d'agents organophosphorés neutres suivantes :

les phosphates 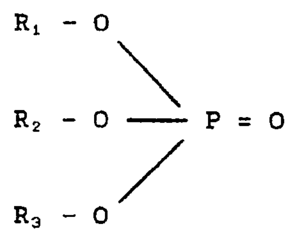 (I)

les phosphonates 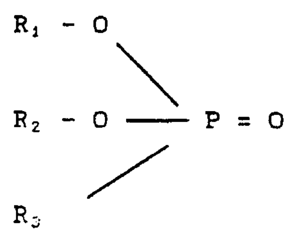 (II)

les phosphinates 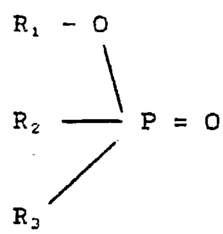 (III)

les oxydes de phosphine 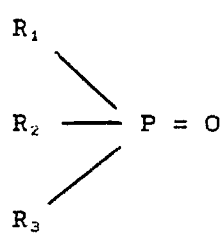 (IV)

dans les formules (I) à (IV), $R_1$, $R_2$ et $R_3$ représentent des radicaux hydrocarbonés aliphatiques, cycloaliphatiques et/ou aromatiques, ayant de 1 à 18 atomes de carbone et dans lesquelles au moins l'un des radicaux comprend au moins 4 atomes de carbone.

9. Procédé selon l'une des revendications 1 à 8 caractérisé par le fait que le composé organophosphoré neutre est choisi parmi le tri-n-butylphosphate (TBP), le tri-isobutylphosphate (TIBP), le dibutylbutylphosphonate (DBBP), le di-(éthyl-2 hexyl) éthyl-2 hexylphosphonate (DEHEHP), l'oxyde de tri-n-octylphosphine (TOPO).

10. Procédé selon l'une des revendications 1 à 9 caractérisé par le fait que le composé organophosphoré neutre est le tributylphosphate.

11. Procédé selon l'une des revendications 1 à 10 caractérisé par le fait que la phase organique comporte en outre au moins un diluant organique choisi parmi le groupe constitué par les hydrocarbures aliphatiques, les coupes pétrolières du type kérosène ou Solvesso-

12. Procédé selon la revendication 11 caractérisé par le fait que le diluant est une coupe pétrolière du

type kérosène.

13. Procédé selon l'une des revendications 1 à 12 caractérisé par le fait que l'on procède après l'étape d'extraction, une opération de lavage de la phase organique avec de l'eau ou une solution diluée d'acide nitrique inférieure à environ 0,3 N.

14. Procédé selon l'une des revendications 1 à 13 caractérisé par le fait que l'on procède à une étape de réextraction de la ou des terres rares contenues dans la phase organique avec de l'eau ou une solution diluée d'acide nitrique inférieure à environ 0,3 N.

15. Procédé selon l'une des revendications 1 à 14 caractérisé par le fait que l'on sépare la phase aqueuse et la phase organique et que l'on recueille la ou les terres rares sous forme de nitrate dans la phase aqueuse.

16. Procédé selon la revendication 15 caractérisé par le fait que l'on récupère la ou les terres rares sous forme d'oxyde, à partir de ladite solution, en effectuant leur précipitation sous forme d'hydroxyde, de carbonate ou d'oxalate, puis la calcination du précipité séparé.

17. Procédé selon l'une des revendications 1 à 16 caractérisé par le fait que l'on récupère le cobalt sous forme d'oxyde, à partir de la solution aqueuse épuisée en terre(s) rare(s) obtenue à l'étape d'extraction, en effectuant sa précipitation sous forme d'oxalate puis la calcination du précipité séparé.

18. Procédé selon la revendication 17 caractérisé par le fait que l'on élimine au préalable les ions alcalino-terreux en effectuant leur précipitation sous forme de fluorure.

19. Utilisation du procédé de l'invention décrit dans l'une des revendications 1 à 18 au traitement des résidus de fabrication des aimants samarium/cobalt et terres rares/cobalt.

20. Utilisation selon la revendication 19 caractérisée par le fait que le résidu traité présente un pourcentage de terre(s) rare(s) pouvant varier de 10 à 50 %, de cobalt allant de 30 à 80 %, le complément à 100 % étant constitué par des impuretés.

FIG. 1

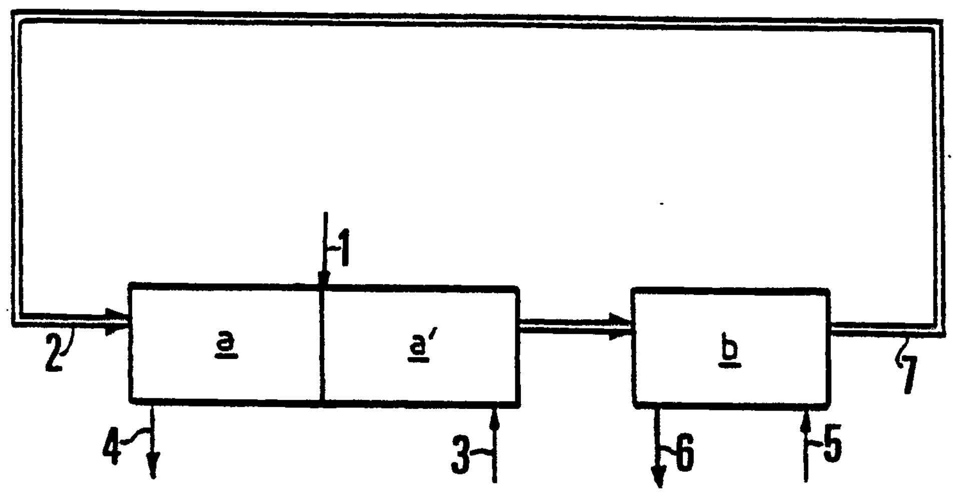

Office européen des brevets

# RAPPORT DE RECHERCHE EUROPEENNE

Numero de la demande

EP 89 40 1119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | PATENT ABSTRACTS OF JAPAN, vol. 9, no. 278 (C-312)[2001], 6 novembre 1985; & JP-A-60 122 718 (NIHON PUREETEINGU K.K.) 01-07-1985 * Résumé * | 1,8,13, 14,16 | C 01 F 17/00<br>C 22 B 3/00<br>C 22 B 59/00 |
| A | EP-A-0 156 735 (RHONE-POULENC SPECIALITES CHIMIQUES) | | |
| A | US-A-3 387 944 (L.G. SHERRINGTON) | | |
| A | US-A-2 809 091 (A.A. JONKE) | | |
| A | EP-A-0 284 503 (RHONE-POULENC CHIMIE) | | |
| A | EP-A-0 284 504 (RHONE-POULENC CHIMIE) | | |
| A | FR-A-2 611 145 (MITSUBISHI CHEMICAL INDUSTRIES LTD) | | |

| DOMAINES TECHNIQUES RECHERCHES (Int. Cl.5) |
|---|
| C 01 F<br>C 22 B |

Le présent rapport a été établi pour toutes les revendications

| Lieu de la recherche | Date d'achèvement de la recherche | Examinateur |
|---|---|---|
| LA HAYE | 17-08-1989 | JACOBS J.J.E.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant